# DEMANDE DE BREVET EUROPEEN

(11) **EP 1 640 114 A1**
(43) Date de publication de la demande: **29.03.2006**
(21) Numéro de dépôt: 04405609.1
(22) Date de dépôt: 24.09.2004
(51) Int. Cl.: B24B 41/04, B24B 3/24, B23Q 1/25, B23Q 1/70

(54) **Support pour broche**

(71) Demandeur: Rollomatic S.A., 2525 Le Landeron (CH)
(72) Inventeur: Rollier, Michel, 2525 Le Landeron (CH); Pahud, Pierre, 2900 Porrentruy (CH)
(74) Mandataire: Ganguillet, Cyril

(57) **Abrégé**

La broche (4) à corps cylindrique présentant les deux zones coaxiales (26), munie d'une portée (28) de fixation de meule et des moyens de raccordement (29 et 30), est placée sur la paroi (3) du socle (1) de manière que les zones (26) reposent chacune selon deux lignes parallèles sur les surfaces 8 des appuis en Vé (7). Le couvercle (15) est alors rabattu autour de l'articulation (23) de manière que la vis (25) s'engage dans le taraudage (14) de la colonnette (11) et que le serrage de la vis de fixation (25) assure une flexion élastique contrôlée des lamelles (20). Le socle (1) est fixé à l'endroit voulu de la machine de meulage par des vis engagées dans les forures (5).

## Description

La présente invention a pour objet un support pour broche à corps cylindrique dans une machine de meulage.

Dans l'usinage de certaines pièces comme des outils de forage en matériaux durs on utilise des machines de meulage qui peuvent être pourvues de plusieurs broches équipées de meules de structures diverses. Pour assurer la régularité des contraintes on utilise souvent des broches à corps cylindrique et les supports destinés à recevoir ces broches doivent les fixer de manière sûre tout en permettant leur extraction et leur remplacement rapide et facile, sans exiger des ajustages fastidieux.

Ces exigences ne sont que très partiellement remplies dans les machines de meulage connues jusqu'à maintenant et le but de la présente invention est précisément de créer un support répondant mieux que les supports connus aux divers besoins mentionnés.

A cet effet la présente invention concerne un support pour broche à corps cylindrique dans une machine de meulage, caractérisé en ce qu'il comprend un socle rigide muni d'une paire d'appuis ayant des surfaces d'appui en forme de Vé destinées à supporter la face externe de la broche, un couvercle pourvu d'éléments élastiques et un dispositif de fixation ouvrant qui relie le couvercle au socle et serre, en position fermée, deux parties du corps cylindrique de la broche contre les appuis en Vé avec déformation élastique des dits éléments élastiques.

Des caractéristiques importantes du support pour broche selon l'invention ressortent des revendications subordonnées à la revendication 1.

On va décrire ci-après une forme d'exécution de l'objet du brevet, donnée à titre d'exemple, en se référant au dessin annexé dont :

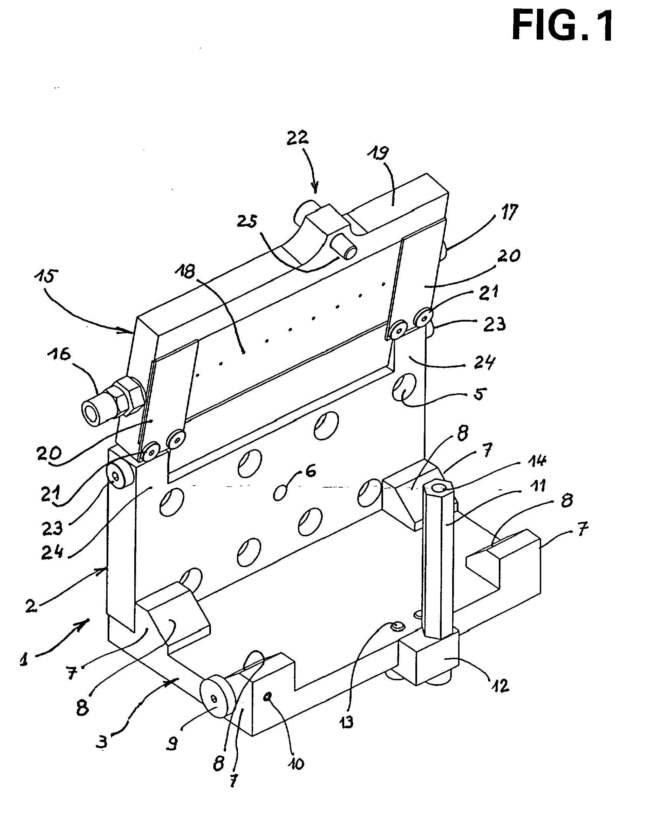

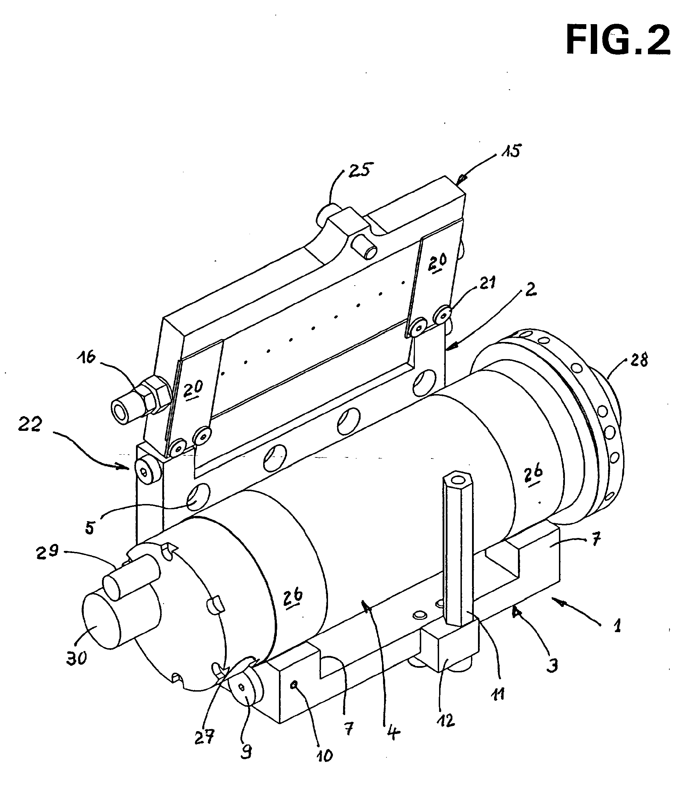

Les fig. 1 et 2 sont des vues en perspective de cette forme d'exécution, à l'état ouvert, la première sans broche, la seconde avec la broche correspondante en place.

La partie principale du support représenté sur le dessin est le socle rigide 1 qui se compose de deux parois 2 et 3 solidaires l'une de l'autre et disposées en L. Ces deux parois sont de forme rectangulaire, leur largeur correspondant sensiblement au diamètre de la partie cylindrique d'une broche 4 (fig.2) que le support a pour fonction d'immobiliser alors qu'il est fixé lui-même à un endroit approprié dans une machine de meulage. Il existe des machines de meulage de différents types mais on connaît notamment des machines portant une pluralité d'outils destinés à agir successivement sur une même pièce pour effectuer différentes opérations de rectifiage ou d'affûtage. Dans certaines machines ces outils sont montés sur un carrousel alors que la pièce à usiner est montée dans un porte-pièce en position centrale. On conçoit que les broches porte-meules doivent pouvoir être changées et ajustées facilement alors que la précision de leur positionnement est une condition essentielle. Le support 1 répond à de telles exigences.

La paroi 2 du support 1 comporte une série de trous 5 pour sa fixation sur une coulisse de la machine de meulage. Un trou supplémentaire 6 permet d'assurer l'orientation du support sur la coulisse. Le long de son bord longitudinal supérieur la paroi 2 comporte deux saillies 24 limitant une échancrure centrale et dont le rôle apparaîtra plus loin.

La paroi 3 est solidaire de la paroi 2 le long de son bord longitudinal. Elle peut lui être liée par un moyen de fixation tel que soudage ou vissage par exemple. Elle peut aussi être d'une pièce avec cette paroi. Elle comporte sur sa face intérieure deux paires de plots 7 de forme prismatique, de profil triangulaire disposés aux quatre angles de la paroi, avec sur chaque plot une face plane oblique 8 de préférence à 45 degrés par rapport au plan de la paroi. Chacune de ces paires de plots disposée à l'une des extrémités de la paroi définit un appui en Vé sur lequel reposera une zone de surface cylindrique 26 de la broche 4 de la fig. 2. Les plots 7 peuvent être des pièces rapportées ou formées d'usinage avec la paroi. Un des plots 7 présente dans sa face axiale extérieure une forure taraudée dans laquelle est engagée une vis 9 à large tête en forme de disque servant au positionnement axial de la broche 4. Cette vis peut être bloquée au moyen d'une butée à tige filetée engagée dans une forure latérale 10 .

A proximité du centre du bord longitudinal externe de la paroi 3 est montée une colonnette 11 qui présente ici un profil hexagonal, dont l'extrémité inférieure est engagée dans une pièce en équerre 12 fixée sous la paroi 3 par deux vis 13 et dont l'extrémité supérieure forme une surface de butée plane avec un trou taraudé 14.

Le support décrit comporte encore un couvercle 15 dont la forme en plan correspond à celle de la paroi 3 et qui est relié au socle 1 par un dispositif de fixation ouvrant dont la colonnette 11 fait partie. La pièce principale du couvercle 15 est une plaque 19 avec chambre intérieure, avec des raccords 16 ou 17 pour une alimentation en eau de refroidissement et avec une lignée de trous 18 dans sa face intérieure. Cette disposition permet d'arroser la broche à volonté afin de prévenir, en cas de nécessité une augmentation de température en cours de travail, susceptible d'entraîner des déformations nuisibles pour la précision de l'usinage. Les trous 18 débouchent dans une creusure longitudinale de faible profondeur ménagée au centre de la face intérieure de la plaque 19. A ses extrémités cette creusure est recouverte par deux lamelles élastiques 20 disposées transversalement. Ces lamelles sont fixées à une extrémité par des vis 21 sur le bord relevé de la plaque 19 et reposent à leur autre extrémité sur l'autre bord relevé de cette plaque.

Le dispositif de fixation ouvrant 22 qui relie le couvercle 15 au socle 1 comporte d'abord une articulation 23 entre le bord longitudinal intérieur de la plaque 19 et les saillies 24 de la plaque 2. La disposition de cette articulation est évidente. Elle permet de basculer le couvercle 15 de la position représentée au dessin à une position de fermeture où il est approximativement parallèle à la paroi 3. Ensuite le dispositif de fixation comporte une vis 25 liée au couvercle 15 comme on le voit au dessin et qui en position rabattue de cette pièce s'engage dans le taraudage 14 de la colonnette 11. Le système est donc d'une grande simplicité. En outre il est très précis et efficace.

En effet la fig. 2 montre comment la broche à corps cylindrique 4 se place sur les appuis en Vé 7 alors que le couvercle 15 est en position ouverte. Les deux zones 26 cylindriques coaxiales et de largeur correspondant aux surfaces 8 viennent se placer sur ces surfaces, en contact avec elles selon deux lignes parallèles. Chaque support comporte des appuis 7 agencés en fonction d'un diamètre de corps de broche bien déterminé. En outre la position axiale de la broche 4 est déterminée par une rainure 27 ménagée dans le corps de broche et dans laquelle se place la périphérie de la tête de vis 9. Le corps de broche étant ainsi posé à sa place on rabat le couvercle 15. Les lamelles 20 sont pressées sur les génératrices supérieures des zones 26. Par vissage de la vis 25 dans le taraudage 14 la face inférieure du rebord périphérique de la plaque 19 vient en contact avec la surface supérieure de la colonnette 11, qui forme une butée donnant aux lamelles une déformation élastique ajustée grâce à un choix judicieux de la longueur de la colonnette 11. On règle ainsi à volonté la force de serrage de la broche dans son support.

Le support décrit représente une construction simple et parfaitement fonctionnelle. La broche n'est en contact avec des surfaces massives que selon un minimum de lignes de sorte que les parcours de l'air et de l'eau de refroidissement ne sont pas entravés. La force de serrage peut être réglée à volonté selon les opérations que les outils de meulage ont à effectuer. L'extraction d'une broche pour échange ou pour réaffûtage de la meule est une opération simple et rapide.

A la fig. 2 on voit que lorsque la broche 4 est en place sur les appuis 7, sa position axiale étant fixée par la tête de la vis 9, aussi bien l'outil (non représenté) qu'elle porte à son extrémité antérieure 28, que les moyens de raccordement disposés à l'extrémité postérieure (à savoir l'alimentation électrique 30 et une amenée d'air 29 pour créer une surpression à l'intérieur de la broche de façon à empêcher l'entrée de poussières) sont entièrement dégagés du support.

On a décrit ici une forme d'exécution particulière du support selon l'invention, mais il est évident que des variantes d'exécution sont possibles sans sortir du cadre défini par les revendications. Ainsi par exemple les moyens de fixation du support à la machine (trous 5) pourraient être prévus dans la paroi 3 entre les appuis en Vé; la conformation du dispositif de fixation ouvrant pourrait différer de ce qui a été décrit; le circuit de refroidissement par aspersion d'eau pourrait être incorporé ou associé à une des parois 2 ou 3, et non au couvercle; les lamelles élastiques de mise en pression du corps de broche pourraient être disposées différemment de ce qui a été représenté, par exemple ne comporter qu'une lamelle disposée au centre de la broche, éventuellement en orientation longitudinale, etc.

## Revendications

1. Support pour broche à corps cylindrique dans une machine de meulage, **caractérisé en ce qu'**il comprend un socle rigide (1) muni d'une paire d'appuis (7) ayant des surfaces d'appui (8) en forme de Vé destinées à supporter la face externe de la broche (4), un couvercle (15) pourvu d'éléments élastiques (20) et un dispositif de fixation ouvrant (22) qui relie le couvercle (15) au socle (1) et serre, en position fermée, deux parties (26) du corps cylindrique de la broche contre les appuis en Vé (7) avec déformation élastique des dits éléments élastiques (20).

2. Support selon la revendication 1, **caractérisé en ce que** le socle (1) se compose de deux parois (2, 3) solidaires l'une de l'autre et disposées en L, **en ce que** le couvercle (15) est monté sur une des dites parois (2) par une articulation (23) dont -l'axe se trouve le long du bord de la paroi, les appuis (7) étant en saillie dans le côté intérieur de l'autre paroi (3), et **en ce que** le dispositif de fixation ouvrant (22) comprend, outre la dite articulation (23), une partie (25) liée au bord du couvercle opposé à l'articulation et une autre partie (11) liée à la paroi (3) pourvue des appuis (7).

3. Support selon la revendication 2, **caractérisé en ce que** la paroi (3) du socle équipée des appuis (7) comporte en outre un organe (9) réglable dans le sens de l'axe de la dite articulation, agencé pour coopérer avec le corps cylindrique de la broche (4) de manière à fixer sa position axiale.

4. Support selon la revendication 2, **caractérisé en ce que** les dits éléments élastiques (20) du couvercle (15) sont des lamelles flexibles disposées sur le côté intérieur de celui-ci de manière à appuyer sur le corps cylindrique de la broche et presser ce dernier sur les surfaces en Vé (8) des appuis (7) quand le couvercle est rabattu en position fermée.

5. Support selon la revendication 2, **caractérisé en ce que** l'une des parties (11) du dispositif de fixation comprend une colonnette de longueur réglable en saillie sur le bord extérieur de la paroi (3) qui la porte, cette colonnette (11) comportant un taraudage (14) dans lequel entre une vis (25) formant l'autre partie du dispositif de liaison.

6. Support selon la revendication 4, **caractérisé en ce que** les dites lamelles flexibles (20) sont orientées perpendiculairement à l'axe de l'articulation (23) du couvercle, fixées à ce dernier à une de leurs extrémités et disposées chacune au droit de l'un des appuis (7).

7. Support selon la revendication 1, **caractérisé en ce que** le socle (1) est pourvu de moyens de fixation (5) permettant de le monter à un emplacement précis sur la machine de meulage.

8. Support selon la revendication 1, **caractérisé en ce que** le socle (1) ou le couvercle (15) est pourvu de conduits internes de circulation d'un liquide de refroidissement avec une entrée (16, 17) raccordable à une alimentation et des orifices de sortie (18) permettant de projeter le liquide sur le corps de broche.
